# EUROPEAN PATENT APPLICATION

(11) **EP 4 671 494 A1**
(43) Date of publication of application: **31.12.2025**
(21) Application number: 24184311.9
(22) Date of filing: 25.06.2024
(51) Int. Cl.: E21F 5/00, B60S 1/56, E21F 17/00

(54) **CONTROLLING CLEANING OF A SCANNING DEVICE OF A MINING MACHINE**

(71) Applicant: Sandvik Mining and Construction Oy, 33330 Tampere (FI)
(72) Inventor: RAUHALA, Riku, 33311 Tampere (FI); LAHTINEN, Juha, 33311 Tampere (FI); NASKALI, Juuso, 33311 Tampere (FI)
(74) Representative: Sandvik

(57) **Abstract**

An apparatus comprises: at least one processor; and at least one memory including computer program code, the at least one memory and the computer program code configured to, with the at least one processor, cause the apparatus at least to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary.

## Description

### TECHNICAL FIELD

Various example embodiments generally relate to the field of mining machines. Some example embodiments relate to controlling cleaning of a scanning device of a mining machine.

### BACKGROUND

In various fields of technology, such as for example mining, it may be desired to automate operations of machines such as vehicles. Mining machines may include scanning devices configured to obtain information about their environment. Scanning data obtained this way may be used for controlling various automated operations of mining machines.

### SUMMARY

The invention is defined by the features of the independent claims. Some specific embodiments are defined in the dependent claims. This summary is provided to introduce a selection of concepts in a simplified form that are further described below in the detailed description. This summary is not intended to identify key features or essential features of the claimed subject matter, nor is it intended to be used to limit the scope of the claimed subject matter.

According to a first aspect, an apparatus for controlling a mining machine is disclosed. The apparatus may comprise: at least one processor; and at least one memory including computer program code, the at least one memory and the computer program code configured to, with the at least one processor, cause the apparatus at least to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary.

According to a second aspect, a mining machine is disclosed. The mining machine may be configured to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary.

According to a third aspect, a remote control device is disclosed. The remote control device may be configured to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary.

According to a fourth aspect, a method for controlling a mining machine is disclosed. The method may comprise: detecting a need to clean a scanning device of the mining machine, wherein the scanning device is configured to provide scanning data to a navigation application of the mining machine; detecting a carrier of the mining machine to be substantially stationary; and causing cleaning of the scanning device, in response to detecting the carrier of the mining machine to be substantially stationary.

According to a fifth aspect, an apparatus for controlling a mining machine is disclosed. The apparatus may comprise: means for detecting a need to clean a scanning device of the mining machine, wherein the scanning device is configured to provide scanning data to a navigation application of the mining machine; means for detecting a carrier of the mining machine to be substantially stationary; and means for causing cleaning of the scanning device, in response to detecting the carrier of the mining machine to be substantially stationary.

According to a sixth aspect, a computer program, a computer program product, or a (non-transitory) computer-readable medium is disclosed. The computer program, computer program product, or (non-transitory) computer-readable medium may comprise program instructions which, when executed by an apparatus, cause the apparatus at least to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary.

Example embodiments of the above aspects are described in the claims, the description, and/or the drawings. According to some aspects, there is provided the subject matter of the independent claims. Some further aspects are defined in the dependent claims. Many of the attendant features will be more readily appreciated as they become better understood by reference to the following description considered in connection with the accompanying drawings.

### LIST OF DRAWINGS

The accompanying drawings, which are included to provide a further understanding of the example embodiments and constitute a part of this specification, illustrate example embodiments and, together with the description, help to explain the example embodiments. In the drawings:
FIG. 1 illustrates an example of a loader;
FIG. 2 illustrates an example of a drill rig;
FIG. 3 illustrates an example of a loader communicatively coupled to a remote control device;
FIG. 4 illustrates an example of a state machine associated with a loading cycle of a loader;
FIG. 5 illustrates an example of a state machine associated with a drilling cycle of a drill rig;
FIG. 6 illustrates an example of a flow chart for controlling cleaning of a scanning device of a mining machine;
FIG. 7 illustrates an example of a scanning device configured with cleaning functionality;
FIG. 8 illustrates an example of a flow chart for controlling cleaning of a scanning device of a mining machine based on fluid level of a detergent;
FIG. 9 illustrates an example of a flow chart for controlling cleaning of a scanning device of a mining machine via a user interface;
FIG 10. illustrates an example of an apparatus configured to practise one or more example embodiments; and
FIG. 11 illustrates an example of a method for controlling a mining machine.

Like references are used to designate like parts in the accompanying drawings.

### DESCRIPTION

Reference will now be made to embodiments, examples of which are illustrated in the accompanying drawings. The description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

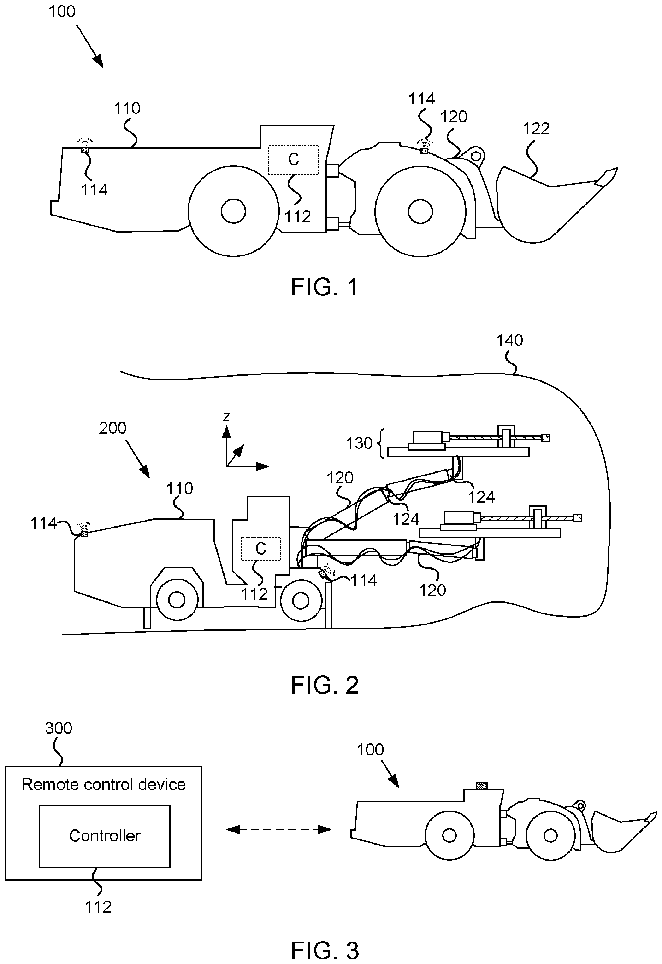

FIG. 1 illustrates an example of a loader. Even though loader 100 is illustrated in FIG. 1, it is understood that example embodiments of the present disclosure may also be applied to other type of mining machines, for example mobile bolter machines, underground drill rigs (cf., FIG. 2), and surface drill rigs.

Loader 100 may be an automated mining machine, for example an automated vehicle, e.g., a mining vehicle, equipped with tools configured for loading and transporting material. Loading may comprise filling a container, e.g., bucket 122, of a mining machine with mining material (e.g., rock or minerals). Unloading may comprise releasing the mining material from the container, for example to ground or floor of a tunnel. An automated vehicle operating in an automatic mode may be configured to, for example, receive a task to be performed, perceive (portions) of the environment of the automated vehicle, and autonomously perform the task while taking the environment into account. An automated vehicle operating in an automatic mode may be configured to operate independently but may be taken under external control at certain operation areas or conditions, such as during states of emergencies. Example embodiments of the present disclosure may be however applied also in non-autonomous or semi-autonomous loader machines, for example remote-controlled loader machines, as well as other type of non-autonomous or semi-autonomous mining machines.

Loader 100 may comprise a movable carrier 110 and at least one boom 120 connected to movable carrier 110. Loader 100 may comprise a bucket 122, for example coupled to boom 120. Movable carrier 110 may comprise equipment for moving loader 100, such as for example a motor and wheels. Movable carrier 110 may be configured to move autonomously or it may be configured to be controlled by a human operator, either remotely or locally at loader 100. Boom 120 and bucket 122 may be configured to be controlled with, for example, mechanical switches or manual controllers installed at a user interface of loader 100 or by a controller 112 (e.g., a control apparatus) configured to control operation(s) of loader 100. Controller 112 may be also configured to control other aspects of loader 100, such as parts of movable carrier 110 like the motor and wheels.

Loader 100 may comprise at least one scanning device 114 for capturing and/or providing a representation of the environment of loader 100, e.g., objects around scanning device 114 or component(s) of loader 100 such as bucket 122. Scanning device(s) 114 may be integrated or mechanically coupled to loader 100 (e.g., movable carrier 110). Scanning device(s) 114 may be coupled to loader 100 at any suitable position, for example at the roof and/or corner(s) of movable carrier 110. Loader 100 may comprise a plurality of scanning devices 114, for example at corners of movable carrier 110. Controller 112 may be configured to receive scanning data from scanning device(s) 114 and determine the representation of the environment of loader 100 based on the scanning data.

Scanning device 114 may comprise, for example, one or more of the following: one or more cameras, one or more radio detection and ranging (radar) sensors, or one or more light detection and ranging (lidar) sensors. One scanning device 114 may therefore comprise a single sensor or group of two or more sensors. Scanning device 114 may comprise at least one camera, which may be used to extract an image of the environment of loader 100. The camera may be alternatively configured to capture video data comprising one or more video frames. Alternatively, scanning device 114 may comprise a time-of-flight (ToF) camera, which may be configured to determine a distance between the camera and an object by measuring a round-trip time of an artificial light signal provided by a laser or a light-emitting diode (LED). A lidar sensor may be configured to determine a distance to an object by targeting the object with a laser and measuring the time for the reflected light to return to a receiver of the lidar sensor. A radar sensor may be configured to transmit electromagnetic energy and to observe the echoes returned from the environment of loader 100. Based on the scanning, controller 112, or loader 100 in general, may be configured to obtain point cloud data that represents the scanned environment. The point cloud data may for example comprise a three-dimensional representation of the environment of loader 100.

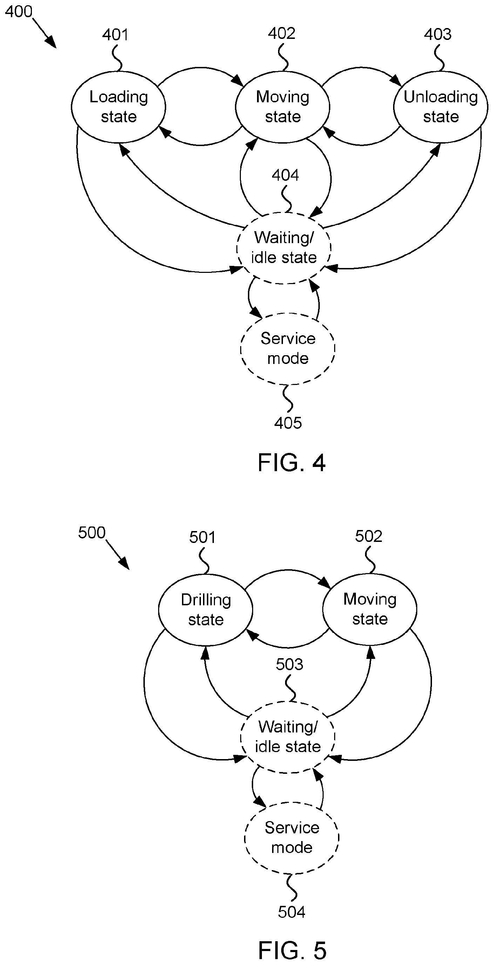

Scanning device 114, or loader 100 in general, may be configured to perform scanning in various operational states of loader 100, for example during loading or unloading, or during movement of movable carrier 110. Loader 100 may be configured with a loading cycle. A loading cycle may comprise a sequence of operational states configured for performing a loading, transportation, and/or unloading task, for example to sequentially carry loads of mining material to a storage area of a mine. A loading cycle may for example comprise a loading state, a moving state, and/or an unloading state, as illustrated in FIG. 4. The loading cycle may be stored on a memory of loader 100 and retrieved from the memory by controller 112.

Scanning may be implemented for example with a simultaneous localization and mapping (SLAM) system, which may be configured to scan the environment of loader 100, for example to obtain point cloud data of surrounding surfaces or objects. The obtained point cloud data may be used, e.g., by a navigation application such as the SLAM system, for determining the position of loader 100, for example based on comparing the scanning data to reference data such as for example a 3D model of a mining tunnel.

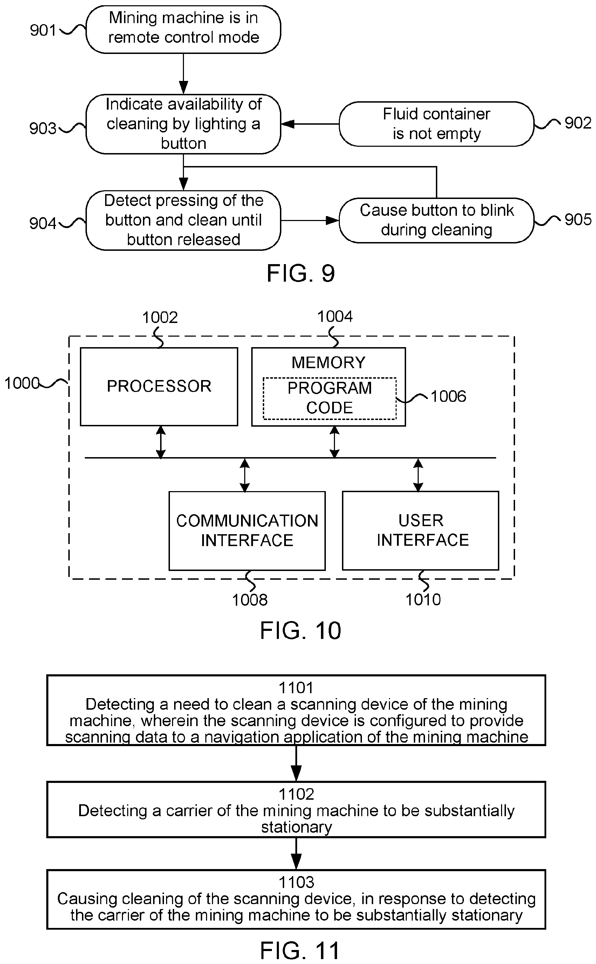

As already noted above, loader 100 may comprise a controller (C) 112. Controller 112 may be communicatively coupled to scanning device 114, for example to receive scanned sensor data from scanning device 114, or, to request scanning device 114 to initiate scanning. Controller 112 may be for example provided as a software application residing on a memory and being executable by a processor. An example of an apparatus suitable for implementing controller 112 is provided in FIG. 10. Controller 112 may comprise, or be communicatively coupled to, various functions, blocks, or applications for implementing functionality of controller 112. For example, controller 112 may comprise or be communicatively coupled to a data management server, which may be configured to store information such as a 3D model of the environment of loader 100 or a configuration of the sequence of operational states (e.g., coordinates for loading and/or unloading in case of a loading cycle).

Controller 112 may comprise a navigation application configured to control, or enable a human operator to control, navigation of loader 100, for example to move loader 100 to loading or unloading. In general, the navigation application may be configured to control movement of loader 100, or any other type of mining machine, based on the scanning data obtained by scanning device(s) 114. Alternatively, the navigation application may be external to controller 112, for example located at another component of loader 100 or at a server external to loader 100.

FIG. 2 illustrates another example of mining machine, in this case a drill rig. Drill rig 200 may comprise component(s) similar to loader 100 of FIG. 1, for example movable carrier 110 and boom(s) 120 connected thereto, and/or equipment for moving or stabilising the drill rig (e.g., motor, wheels, and/or stabilizer jack(s)). Drill rig 200 may comprise drilling unit(s) 130. Drilling unit 130 may comprise equipment for drilling holes in drilling surface 140. Drilling unit 130 may for example comprise a drill rod and a feed beam configured to enable a drill bit to be applied to drilling surface 140 in order to drill a hole. Even though two booms 120 have been illustrated in FIG. 2, drill rig 200 may generally comprise one or a plurality (e.g., two, three, four,...) of booms 120. Boom(s) 120 may comprise a plurality of boom parts coupled to each other, movable carrier 110, and/or drilling unit 130 by joint(s) 124. Controllable joints 124 enable drilling unit 130 to be placed at a desired position and orientation with respect to drilling surface 140. Drill rig 200 may comprise one or more of the parts described above, or other tool(s) or equipment relevant for a drill rig. As already described with reference to FIG. 1, also drill rig 200 may comprise controller (C) 112.

Drill rig 200 may be configured to operate according to a drilling plan. The drilling plan may be configured to indicate target position(s) for the drill bit for drilling hole(s) to drilling surface 140. A target position of drill bit may comprise a start position of a hole planned to be drilled on drilling surface 140. The drilling plan may comprise a digital drilling plan. Drill rig 200 may be preconfigured with the drilling plan. The drilling plan may be for example stored on a memory of drill rig 200 or controller 112. Controller 112 may be configured to obtain the drilling plan by retrieving it from the memory. Alternatively, controller 112 may be configured to obtain the drilling plan by receiving it from a remote device, e.g., a server, or via a user interface.

Drill rig 200 may be configured with a drilling cycle, for example in order to perform actions defined in the drilling plan. The drilling cycle may comprise a sequence of operational states configured for performing a drilling task, for example to sequentially drill multiple holes at different positions on drilling surface 140. The drilling cycle is provided as another example of an automated sequence of operational states. The drilling cycle may for example comprise a drilling state and a moving state, as will be further described with reference to FIG. 5.

Controller 112 may comprise, or be communicatively coupled to, various functions, blocks, or applications for implementing functionality of controller 112. For example, controller 112 may comprise or be communicatively coupled to a data management server, which may be configured to store information on functions to be performed by drill rig 200, such as the drilling plan, drilling cycle, tunnel lines, point cloud or mesh presentations of tunnel lines or profiles, a mine map point cloud, or the like; or in general representation(s) of the working environment of drill rig 200.

Drill rig 200 may comprise at least one scanning device 114, similar to loader 100 of FIG. 1. Scanning device(s) 114 may be configured to scan environment of drill rig 200, for example to detect distances to surrounding objects, for example drilling surface 140 or other objects in the environment of drill rig 200. Scanning of drilling surface 140 may comprise scanning with scanning device(s) 114 such that their sensing direction is towards drilling surface 140. Even if not explicitly described drill rig 200 may comprise components and functions similar to loader 100, and vice versa, as applicable to the particular type of mining machine.

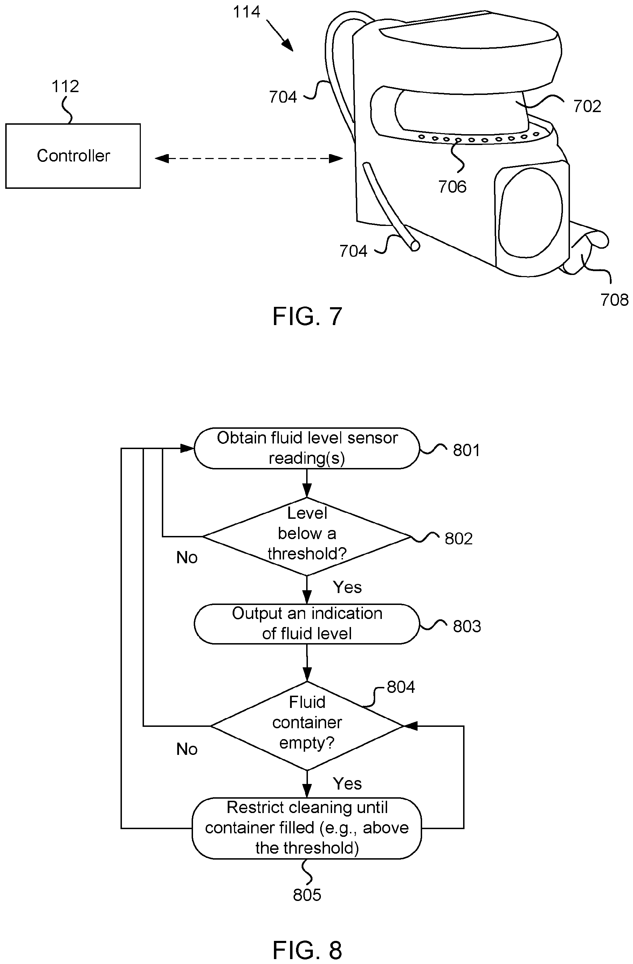

It may be desired to obtain scanning data during, or in preparation of, movement of movable carrier 110, for example to enable safe and efficient movement of loader 100 or drill rig 200. On the other hand, it may be less valuable to obtain scanning data when movable carrier 110 is not moving or when movable carrier 110 is not planned or commanded to move. Scanning device 114 may comprise, or be configured to be coupled to, a scanner cleaner, e.g., equipment configured to clean the lens of scanning device 114, as will be further described with reference to FIG. 7. This provides the benefit of enabling to extend operational time of loader 100 or drill rig 200, for example in dusty environments. Using an automatic scanner cleaner reduces the need for manual cleaning of the lens of scanning device 114. One target for automatic scanner cleaning may be to enable to postpone manual cleaning until a shift change or a maintenance break. A scanner cleaner may be configured to act as a part of an automated mining machine system. Alternatively, the operator of the mining machine may be enabled to freely activate cleaning of scanning device 114, for example in a remote-operated mode. In case of an automated mode, controller 112 may be configured to control the cleaning to be performed in operational states that do not require scanning, or, when it is possible to pause the automated sequence for cleaning scanning device(s) 114.

Scanning device(s) 114 may be further configured with preventive action with air. For example, an air flow may be used to create a guidance wall for dust, thereby restricting particles from coming into contact with the lens of scanning device(s) 114, as will be further described with reference to FIG. 7. In combination with water as detergent, this provides the benefit of reducing the amount of water needed for cleaning scanning device(s) 114, because the air flow is configured to guide most of the dust away from the lens.

FIG 3. illustrates an example of a loader communicatively coupled to a remote control device. Controller 112 may be alternatively located external to loader 100 and configured to remotely control loader 100. Loader 100 is used herein to represent any type of mining machine, for example a surface drill rig, a track-mounted drill rig, an underground drill rig, a mobile bolter machine, a mesh installation rig, rock drill rig, a mining drill rig, a surface rock drill rig, an underground rock drill rig, or any other type of mining machine. For example, controller 112 may be provided at remote control device 300, which may be external to loader 100, as illustrated in FIG. 3.

Remote control device 300 may comprise a server or other computing device located remote from loader 100, for example at a remote operator station. Functionality of controller 112 may be provided at loader 100, remote control device 300, or distributed between loader 100 and remote control device 300. Information may be exchanged between controller 112 and loader 100 over an internal or external data communication interface, including any suitable wireless or wired connection. Examples of suitable communication interfaces are described with reference to FIG. 10.

FIG. 4 illustrates an example of a state machine for implementing a loading cycle of a loader. It is noted that state machine 400 is provided as one example of a suitable state machine for controlling loader 100 to operate according to a loading cycle. The operational states may be explicit, such that controller 112 is configured with one or more of the described states, or implicit, such that controller 112 is configured to cause particular actions without actual configuration of such a state machine. For example, controller 112 may configured to determine that loader 100 is in a moving state, in response to detecting wheels of carrier 110 to rotate, e.g., with a predetermined speed to the same direction.

A state machine may comprise a software component configured to model system behaviour by defining a finite set of predefined states of the system (e.g., loader 100 or drill rig 200) and transitioning between the states. A state machine may comprise, for example, a finite-state machine (FSM) that is configured be in one of a finite number of states at a given time. As another example, a state machine may comprise a hierarchical state machine (HSM) that may comprise hierarchically nested states comprising one or more substates and superstates. A substate comprises a state that can be active when its superstate is active. A superstate may comprise one or more substates. Therefore, if the system is in a substate, it may also be in a superstate. A state in a HSM may comprise another state machine.

A state may comprise a description of the status of the system that is performing an operation or waiting a transition from a first state to a second state. An FSM and HSM may comprise a start state, an end state and a number of intermediate states. A state may further define events that trigger a transition from a first state to a second state and/or one or more actions that occur when the state machine enters or exists the state. Therefore, a system may transition from one state to another state based on a condition or trigger event.

A transition may comprise a definition of how the state machine reacts when a condition for a state transition is fulfilled or how the state machine reacts to an event that triggers a transition of the state machine from a first state to a second state. A definition of how the state machine reacts may comprise, for example, a definition of at least one state into which the state machine is configured to transition upon fulfilment of a predefined condition or upon occurrence of a predefined event. For example, a transition may define that the state machine exits a first state and enters a second state in response to a predefined event. As another example, a transition may comprise a definition that the state machine exists the first state and enters the second state when a predefined condition is fulfilled. A transition may further comprise a definition of actions that occur upon the transition. For example, loader 100 may be configured to transition to a moving state, in response to completion of a loading task or an unloading task, unless loader 100 is specifically commanded to an idle state.

State machine 400 may comprise loading state 401. In loading state 401, controller 112 may be configured to control loading of loader 100, for example initiation of loading, operations during loading, and/or operations during termination of loading. Loading state 401 may be characterized for example by predefined movement of carrier 110, boom 120, and/or bucket 122 in order to fill bucket 122, for example a change of pitch angle of bucket 122 to capture mining material, optionally with simultaneous forward movement of carrier 110. Loading state 401 may also comprise movement of boom 120 and/or bucket 122 to a transport position, e.g., lifting bucket 122 for transport, for example in preparation of transitioning to moving state 402. Loading state 401 may therefore comprise a state, where loading is ongoing. Additionally, loading state 401 may comprise a state, where loading is enabled, e.g., such that boom 120 and/or bucket 122 are ready to fill bucket 122 upon a command from controller 112.

State machine 400 may comprise moving state 402, in which controller 112 may be configured to cause movable carrier 110 to move, for example, in order to move to a loading location or to carry the mining material to another location such as a load dumping site. Moving state 402 may be characterized, for example by rotation of wheels of loader 100, for example rotation of wheels of loader 100 in same direction (e.g., forward direction). However, moving state 402 may also comprise any operations subsequent to determining, e.g., by controller 112, to initiate movement of movable carrier 110. Controller 112 may be configured to alternate between loading state 401, moving state 402, and unloading state 403 (further described below). The loading cycle may therefore comprise an alternating sequence of loading state 401, moving state 402, and unloading state. Controller 112 may be configured to cause bucket 122 to be lifted for transportation of the loaded material during moving state 402.

As already noted above, state machine 400 may comprise unloading state 403. In unloading state 403, controller 112 may be configured to control unloading of loader 100, for example initiation of unloading, operations during unloading, and/or, operations during termination of unloading. Unloading state 403 may be characterized for example by predefined movement of boom 120 and bucket 120 in order to empty bucket 120, e.g., to change the pitch angle of bucket 112 to cause mining material to fall from bucket 122. Unloading state 403 may also comprise movement of boom 120 and/or bucket 122 to a transport position, in response to termination of unloading. Unloading state 403 may therefore comprise a state, where unloading is ongoing. Additionally, unloading state 403 may comprise a state, where unloading is enabled, e.g., such that boom 120 and/or bucket 122 are ready to empty bucket 122 upon a command from controller 112.

State machine 400 may further comprise other states, such as for example a waiting state (e.g., a pause state) or idle state 404 and/or a service mode state 405. Even though waiting state and idle state are illustrated as a single state, they could be also separate states of state machine 400 or 500. In the waiting state, loader 100 may be configured to wait until receiving a command from controller 112 to proceed to a next operational state. In an idle state, controller 112 may be configured to control loader 100, e.g., movable carrier 110 and other tool(s) or equipment of loader 100, to be substantially stationary. For example, during the idle state the motor of loader 100 may be running, e.g., slowly, while disconnected from a load or out of gear. The service mode may be configured for maintenance or repairment of loader 100. For example, normal control of actuators or functions of loader 100 may disabled or restricted in the service mode.

Controller 112 may be configured to move to waiting/idle state 404 from loading state 401, moving state 402, or unloading state 403 and to return to one of these states from waiting/idle state 404. Controller 112 may be configured to move from waiting/idle state 404 to service mode state 405, and vice versa. It is however possible to configure the transitions between the states in another way.

FIG. 5 illustrates an example of a state machine for implementing a drilling cycle of a drill rig. It is noted that state machine 500 is provided as one example of a suitable state machine for controlling drill rig 200 to operate according to a drilling cycle. The states may be explicit, such that controller 112 is configured with one or more of the described states, or implicit, such that controller 112 is configured to cause particular actions without actual configuration of such a state machine.

State machine 500 may comprise drilling state 501. In drilling state 501, controller 112 may be configured to control drilling by drilling unit 130, for example initiation of drilling, operations during drilling, and/or termination of drilling. Drilling state 501 may be characterized for example by predefined movement of a drill rod or a drill bit such as rotation of the drill rod or the drill bit. However, drilling state 501 may also comprise any operations subsequent to determining, e.g., by controller 112, to initiate drilling, for example controlling movement of boom(s) 120 and/or drilling unit(s) 130 to the desired hole position before causing movement of the drill rod and the drill bit. Drilling state 501 may also comprise movement of boom(s) 120 and/or drilling unit(s) 130 to a transport position in response to termination of drilling. Drilling state 501 may therefore comprise a state, where drilling is ongoing. Additionally, drilling state 501 may comprise a state, where drilling is enabled, e.g., such that drilling unit 130 is ready to drill upon a command from controller 112.

State machine 500 may comprise a moving state 502, in which controller 112 may be configured to cause movable carrier 110 to move, for example in order to enable drilling a hole at another position on drilling surface 140. Moving state 502 may be characterized, for example, by rotation of wheels of drill rig 200. However, moving state 502 may also comprise any operations subsequent to determining, e.g., by controller 112, to initiate movement of movable carrier 110. Controller 112 may be configured to alternate between drilling state 501 and moving state 502. The drilling cycle may therefore comprise an alternating sequence of drilling state 501 and moving state 502. Drilling unit 130 may be disabled during moving state 502.

State machine 500 may further comprise other states, such as for example a waiting/idle state 503 and/or a service mode state 504, similar to corresponding states of state machine 400. For example, in idle state 503, controller 112 may be configured to control drill rig 200, e.g., movable carrier 110 and other tool(s) or equipment of drill rig 200, to be substantially stationary. For example, during idle state 503 the motor of drill rig 200 may be running, e.g., slowly, while disconnected from a load or out of gear. The service mode may be configured for maintenance or repairment of drill rig 200. For example, normal control of actuators or functions of drill rig 200 may disabled or restricted in the service mode.

Controller 112 may be configured to move to idle state 503 from drilling state 501 or moving state 502 and return to one of these states from idle state 503. Controller 112 may be configured to move from idle state 503 to service mode state 504, and vice versa. It is however possible to configure the transitions between the states in another way.

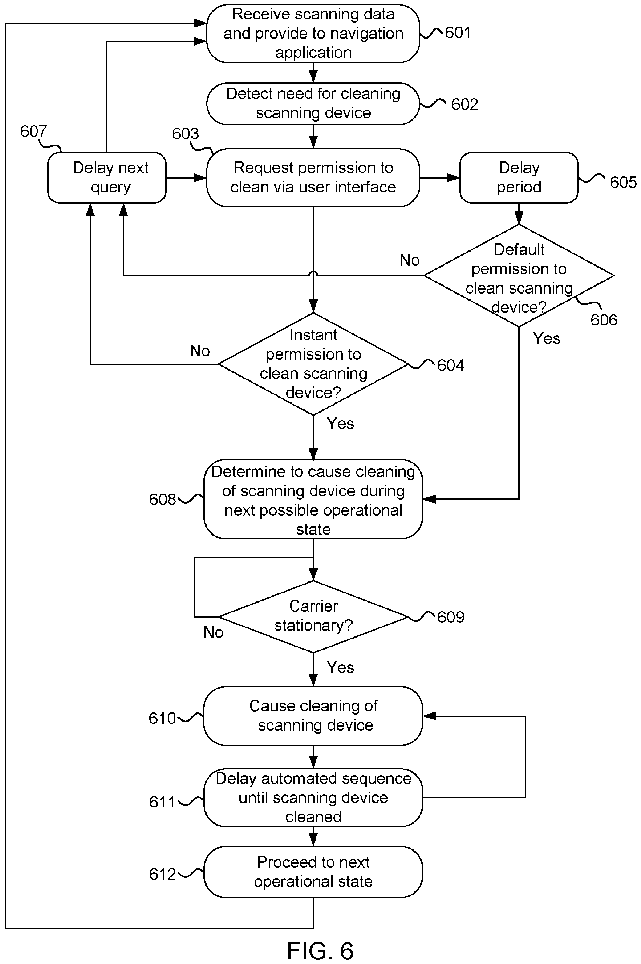

FIG. 6 illustrates an example of a flow chart for controlling cleaning of a scanning device of a mining machine, such as loader 100 or drill rig 200. Operations of FIG. 6 may be configured to be performed, for example, by controller 112, or in general by any suitable device or software component. Controller 112 may be located either at the mining machine 100, 200 or at a remote control device 300. Even though operations of FIG. 6 have been described using one scanning device 114 as an example, controller 112 may be configured to control cleaning of multiple scanning devices, for example in parallel.

At operation 601, controller 112 may be configured to receive scanning data from scanning device 114 and to provide the scanning data to the navigation application. The navigation application may be provided as a software application residing on a memory and being executable by a processor, for example locally at mining machine 100, 200 or externally at remote control device 300. Scanning device 114 may be configured to send its scanning data to controller 112, which may be optionally configured to process the scanning data, e.g., by selecting or combining data or by generating a point-cloud representation, before providing the scanning data to the navigation application. Scanning data may therefore comprise raw sensor data of scanning device 114 or data derived by controller 112 based on data received from scanning device 114. Alternatively, scanning device 114 may be configured to provide its scanning data to the navigation application directly, e.g., without the scanning data being routed via controller 112. Scanning device 114 may be therefore configured to provide its scanning data to the navigation application directly or via controller 112.

At operation 602, controller 112 may be configured to detect a need to clean scanning device 114. Controller 112 may be configured to detect the need to clean scanning device 114, in response to receiving, from scanning device 114, an indication of obstruction of scanning device 114. An example of scanning device 114 is illustrated in FIG. 7. Scanning device 114 may comprise a lens 702 configured to pass light or electromagnetic radiation for scanning the environment of scanning device 114. Scanning device 114 may comprise a fluid inlet 704 configured to provide a path for water or other detergent to lens 702, in order to clean scanning device 114, in particular lens 702. Scanning device 114 may comprise an air inlet 708 configured to provide a path for air to air outlets 706. Air outlets 706 may be configured to output an air flow parallel to lens 702. The air flow may be configured to restrict particles from coming into contact with lens 702. This provides the benefit of reducing the need for cleaning lens 702 by the detergent.

Scanning device 114 may be comprise internal diagnostic functions configured to determine whether lens 702 has been obstructed, e.g., by dust accumulated on lens 702. Scanning device 114 may be for example configured to detect a need for cleaning lens 702, in response to detecting reflections occurring at a distance corresponding to the distance of lens 702 from the source of scanning beams (e.g., light or other electromagnetic radiation). Scanning device 114 may be communicatively coupled to controller 112, for example by means of a wireless or wired communication interface, examples of which will be described with reference to FIG. 10. Scanning device 114 may be configured to transmit an indication of obstruction of scanning device 114 (e.g., lens 702) to controller 112. This provides the benefit of enabling local and reliable detection of the need for cleaning scanning device 114.

Alternatively, or additionally, controller 112 may be configured to detect the need for cleaning scanning device 114 based on receiving an indication of reduced accuracy or reliability of determining the position of mining machine 100, 200 by the navigation application, for example a measure of how accurately the scanning data obtained by scanning device 114 corresponds to the expected environment of mining machine 100, 200. For example, controller 112 may be configured to detect the need for cleaning scanning device 114 based on detecting a decreasing trend in accuracy or reliability metrics of the positioning and/or based on detecting the accuracy or reliability of the positioning to be below a threshold value. This provides the benefit of enabling detection of the need for cleaning scanning device 114 without providing self-diagnostic functions at scanning device 114. Complexity and cost of controlling cleaning of scanning device 114 may be therefore reduced.

At operation 603, controller 112 may be configured to output a query to the operator of mining machine 100, 200, e.g., via a user interface such as user interface 1010, to request a permission to clean scanning device 114. Controller 112 may be configured to output the query, in response to detecting the need for cleaning scanning device 114. The user interface may be located at mining machine 100, 200 or at a remote operator station (e.g., remote control device 300). Optionally, the query may comprise a request for providing one or more of the following: an instant permission to clean scanning device 114, a default permission to clean scanning device 114, an instant refusal of cleaning scanning device 114, or a default refusal of cleaning scanning device 114.

A default permission may comprise a permission that is valid unless the operator of mining machine 100, 200 denies the default permission, for example by indicating an instant refusal of cleaning scanning device 114, e.g., in response to the query. A default refusal may comprise a refusal that is valid unless the operator of mining machine 100, 200 provide an instant permission to clean scanning device 114, for example in response to the query. An instant permission may be therefore configured to override a default refusal. An instant permission may be configured to enable controller 112 to cause cleaning of scanning device at a time determined by controller 112, for example depending on the operational state of mining machine 100, 200. An instant refusal may be configured to override a default permission.

At operation 604, controller 112 may be configured to determine whether an instant permission was received via the user interface. If not, controller 112 may be configured to move to execution of operation 607. If yes, controller 112 may be configured to move to execution of operation 608. Controller 112 may be further configured to determine whether an instant refusal was received via the user interface. Controller 112 may be configured to move to execution of operation 607, in response to receiving an instant refusal of cleaning scanning device 114. In other words, controller 112 may be configured not to cause cleaning of scanning device 114, in response to receiving an instant refusal of cleaning scanning device 114.

As an alternative to receiving the instant permission, controller 112 may be configured to receive, from the operator via the user interface, a command to instantly initiate cleaning of scanning device 114. The query of operation 603 may comprise a request for a command to instantly initiate cleaning of scanning device 114. A request in a query to the operator may comprise a question associated with options for answering the question, for example `Yes' or 'No' or a list of types of permission/refusal (e.g., 'Instant permission', 'Instant refusal', 'Default permission', or 'Instant refusal') Controller 112 may be configured to move to operation 610 (e.g., without performing operations 608 or 609), in response to receiving the command to instantly initiate cleaning of scanning device 114. In other words, controller 112 may be configured to cause cleaning of scanning device 114, in response to receiving the command to instantly initiate cleaning of scanning device 114. Controller 112 may be therefore configured to cause cleaning of scanning device 114 regardless of whether movable carrier 110 is substantially stationary, or, regardless of the current operational state of mining machine 100, 200. This provides the benefit of enabling the operator of mining machine 100, 200 to instantly cause cleaning of scanning device 114. Otherwise, a suitable time for cleaning scanning device may be determined by controller 112, e.g., based on the current operational state of stationarity of mining machine 100, 200.

At operation 605, controller 112 may be configured to apply a delay period. The delay period may comprise a predetermined delay period (e.g., 5 s, 10 s, 30 s, or the like), which may be configured for waiting for an instant permission or an instant refusal from the operator before applying the default permission or the default refusal. The delay period may comprise a time period starting from the query of operation 603. Note that operation 605 may be configured to be performed in parallel with operation 604. If an instant permission or refusal is received at operation 604 during the delay period of operation 605, controller 112 may be configured to continue to operation 607 or 608. Controller 112 may be however configured to determine, based on the default refusal, not to cause the cleaning of scanning device 114, in response to not receiving (e.g., determining that controller 112 has not received) an instant permission to clean the scanning device within the delay period.

At operation 606, controller 112 may be configured to determine whether a default permission to clean scanning device 114 has been received. Controller 112 may be also configured to determine whether a default refusal has been received. Note that controller 112 may be configured to perform the determination of whether a default permission or default refusal has been received, in response to expiry of the delay period of operation 605. Alternatively, controller 112 may be configured to determine, before or during operation 605, whether the default permission or default has been received, and to postpone application of the default permission or the default refusal until the expiry of the delay period. This provides the benefit of enabling the operator of mining machine 100, 200 to override the default permission or refusal with an instant permission or refusal.

Controller 112 may be configured to receive the default permission or default refusal from the operator via the user interface, for example in response to a previous query. Controller 112 may be configured to move to execution of operation 608, in response to determining that a default permission to clean scanning device 114 has been received. This may be however subject to expiry of the delay period. Controller 112 may be configured to move to execution of operation 607, in response to determining that a default permission to clean scanning device 114 has not been received. Controller 112 may be therefore configured not to cause cleaning of scanning device 114, in response to determining that a default permission to clean scanning device 114 has not been received. For example, controller 112 may be configured to determine not to cause cleaning of scanning device 114, in response to receiving an instant refusal of cleaning scanning device 114.

At operation 607, controller 112 may be configured to delay a next query to the operator of mining machine 100, 200. Controller 112 may be for example configured to delay entry to operation 601 or 603 by another predetermined delay (e.g., by N minutes). Controller 112 may be configured to move from operation 607 to operation 601 or 603. Controller 112 may be therefore configured to continue receiving the scanning data (cf., operation 601), detect the need for cleaning scanning device 114 (cf., operation 602), and subsequently output another query to user. Alternatively, controller 112 may be configured to move directly to operation 603 to output another query to the operator based on the previously detected need to cleaning scanning device 114. This may be beneficial for example if the operator of mining machine 100, 200 has provided neither a default permission nor a default refusal of cleaning scanning device 114.

At operation 608, controller 112 may be configured to determine to cause cleaning of scanning device 114 during the next possible operational state, e.g., an operational state where movable carrier 110 of mining machine 100, 200 is substantially stationary. In general, controller 112 may be configured to cause the cleaning of scanning device 114, in response to detecting movable carrier 110 to be substantially stationary, regardless of whether the detection of movable carrier 110 being substantially stationary is based on the operational state of mining machine 100, 200 or other means (e.g., sensor data of movable carrier 110).

When arriving to operation 608 from operation 604, controller 112 may be configured to determine to cause the cleaning of scanning device 114, in response to receiving, from the operator of mining machine 100, 200, e.g., via the user interface, the instant permission to clean scanning device 114. When arriving from operation 606, controller 112 may be configured to determine to cause the cleaning of the scanning device based on the default permission, in response to not receiving an instant refusal to clean scanning device 114 within the delay period of operation 605.

At operation 609, controller 112 may be configured to detect whether movable carrier 110 is substantially stationary. Substantially stationary may refer to a state where carrier 100, 200 is not moving for the purpose of changing position of mining machine 100, 200. Carrier 110 may however move to some extent, for example due to the motor of carrier 110 being running in an idle mode, due to application of stabilizer jacks, or the like.

Controller 112 may be configured to detect movable carrier 110 to be substantially stationary based on the current operational state of mining machine 100, 200 in the automated sequence of operational states of mining machine 100, 200, for example a state of the loading cycle of FIG. 4 or a state of the drilling cycle of FIG. 5. For example, controller 112 may be configured to determine that mining machine 100, 200 is substantially stationary, in response to determining that the current operational state of mining machine 100, 200 is one of the following: an operational state configured for loading of mining material by the mining machine (e.g., loading state 401), an operational state configured for unloading of the mining material by the mining machine (e.g., unloading state 403), an operational state configured for waiting for proceeding to a next operational state in the automated sequence of operational states (e.g., idle/waiting state 404), an operational state associated with a navigational error, or an idle state (e.g., idle/waiting state 404). This provides the benefit of enabling to clean scanning device 114 when obtaining scanning data is less important, thereby increasing efficiency of operation of mining machine 100, 200. Since the time for cleaning scanning device may be determined based on the current operational state, controller 112 is enabled to select the time for cleaning scanning device 114 without resorting to external sensor information, which reduces complexity. The operational state associated with a navigational error may comprise a state where the accuracy or reliability of positioning mining machine 100, 200, e.g., as determined by the navigation application, is low (e.g., accuracy or reliability metrics below a threshold value) or where controller 112 has lost connection to the navigation application.

Alternatively, or additionally, controller 112 may be configured to detect movable carrier 110 to be substantially stationary based on sensor data of movable carrier 110. The sensor data may for example comprise data indicative of the rotational speed of wheels of mining machine 100, 200, the position of stabilizer jacks, or the like. For example, controller 112 may be configured to determine that movable carrier 110 is stationary, in response to receiving sensor data indicative of the rotational speed of the wheels being substantially zero or the stabilizer jack(s) being positioned against the ground. This provides the benefit of improving reliability of detecting stationarity of movable carrier 110, for example in case of discrepancies between the configured behaviour of mining machine 100, 200 in a particular operational state and actual operation of mining machine 100, 200.

At operation 610 , controller 112 may be configured to cause cleaning of scanning device 114, for example by transmitting a command to scanning device 114 to initiate cleaning. Scanning device 114 may be configured to apply the detergent to lens 702 via fluid outlets of scanning device 114 (not shown in FIG. 7), in response to receiving the command from controller 112. Controller 112 may be configured to move to execution of operation 610, in response to determining that carrier 110 is substantially stationary.

Controller 112 may be configured to output an indication of ongoing cleaning, for example via the user interface, or via a communication interface to a backend system or a database. For example, controller 112 may be configured to cause a button on the chair of the operator to blink, for example at a first rate, in order to indicate that cleaning of scanning device 114 is ongoing. This provides the benefit of enabling the operator of mining machine 100, 200 to be informed about ongoing cleaning. In case of manual control of operational states of mining machine 100, 200, the operator is thereby enabled to take into account the progress of cleaning, when determining when to move to the next operational state.

Controller 112 may be configured to stay in operation 610, in response to determining that movable carrier 110 is substantially stationary 112. Controller 112 may be therefore configured to wait for movable carrier 110 to become substantially stationary, before causing the cleaning of scanning device 114 based on the determination of operation 608. This provides the benefit of enabling the operator to accept the cleaning of scanning device 114 in advance of the suitable time for cleaning it. The operator of mining machine 100, 200 is therefore enabled to concentrate on the actual operation (e.g., loading, unloading, drilling) while cleaning of scanning device is controlled automatically when entering respective operational state. This may improve both safety and efficiency of operating mining machine 100, 200. Alternatively, controller 112 may be configured to cause cleaning of scanning device without requesting the permission from the operator. Cleaning of scanning device 114 may be therefore fully automated.

At operation 611, controller 112 may be configured to delay the automated sequence of operating states until cleaning of scanning device 114 has been completed. For example, controller 112 may be configured to iterate operations 610 and 611 such that the cleaning continues in operation 610 and controller 112 delays the automated sequence until the cleaning has been completed in operation 610.

At operation 612, controller 112 may be configured to cause mining machine 100, 200 to proceed to the next operational state in the automated sequence of operational states, in response to completion of the cleaning of the scanning device. This provides the benefit of enabling safe cleaning of scanning device, if mining machine 100, 200 would not otherwise be stationary long enough for cleaning scanning device 114. For example, movement of mining machine 100, 200 without availability of the scanning data may be prevented, if controller 112 keeps mining machine 100, 200 in loading state 401, unloading state 403, drilling state 501, or waiting/idle state 503 until the completion of the cleaning, before allowing mining machine 100, 200 to proceed to moving state 402, 502.

Operations of FIG. 6 provide an automated or semi-automated procedure for cleaning scanning device 114 at a suitable operational state of mining machine 100, 200. It is however noted that some operations may be optional. For example, the procedure may be fully automated such that operations 603, 605, 606, 607 are not present. Furthermore, the order of the operations may be changed and they may be performed concurrently, where appropriate. For example, controller 112 may be configured to perform operation 601 concurrently with at least some of the other operations.

FIG 8. illustrates an example of a flow chart for controlling cleaning of a scanning device of a mining machine based on the fluid level of a detergent. Operations of FIG. 8 may be configured to be performed by controller 112, for example in parallel with operations of FIG. 6.

At operation 801, controller 112 may be configured to obtain fluid level sensor reading(s). The fluid level sensor reading(s) may be indicative of a fluid level of a detergent (e.g., water) configured for cleaning of scanning device 114, e.g., by means of providing the detergent to scanning device 114 via fluid inlet 704.

At operation 802, controller 112 may be configured to determine whether the fluid level is below a threshold (e.g., a second threshold). If not, controller 112 may be configured to continue monitoring the fluid level at operation 801. If yes, controller 112 may be configured to move to execution of operation 803.

At operation 803, controller 112 may be configured to output an indication of the fluid level of the detergent, e.g., an indication of the fluid level being below the threshold, as detected in operation 802. Controller 112 may be configured to output the indication via the user interface or via a communication interface to an external device, e.g., remote control device 300.

For example, controller 112 may be configured to select, based on the fluid level, a state of a light- emitting diode (LED) of the user interface. The LED may be an onboard LED and it may be part of the scanner cleaner. The scanner cleaner may comprise components of scanning device 114 configured for cleaning scanning device 114 such as fluid inlet 704, pump(s), and/or fluid outlet(s) configured to eject the detergent to lens 702. Controller 112 may be for example configured to control the colour of the LED based on the fluid level. For example, controller 112 may be configured to alter the colour of the LED between green, yellow, and red, which may be indicative of sufficient, intermediate, and low fluid levels, respectively. This provides the benefit of enabling the operator of mining machine 100, 200 to easily monitor the fluid level.

At operation 805, controller 112 may be configured to determine whether the container of the detergent is empty, or in general whether the fluid level is below a threshold (e.g., a first threshold). If not, controller 112 may be configured to continue monitoring the fluid level at operation 801. If yes, controller 112 may be configured to move to execution of operation 805.The (second) threshold of operation 805 may be higher than or equal to the (first) threshold of operation 802.

At operation 805, controller 112 may be configured to restrict cleaning of scanning device 114 until the container has been filled, e.g., at least to the (second) threshold of operation 802. For example, controller 112 may be configured to determine not to cause the cleaning of scanning device 114, in response to detecting the fluid level of the detergent configured for cleaning the scanning device to be below the (second) threshold of operation 804. This provides the benefit of avoiding unnecessary determination of whether scanning device 114 is to be cleaned or not, thereby reducing computational load of controller 112. Controller 112 may be configured to output an indication of the restriction of cleaning scanning device 114, for example via the user interface. The indication may for example comprise causing the button of the chair of the operator to blink a second rate, which may be lower than the first rate. This provides the benefit of enabling the operator of mining machine 100, 200 to be informed about unavailability of cleaning scanning device 114, which might enable the operator to manually select the next operational state such that scanning data is not needed or to take mining machine 100, 200 under manual control for navigating it.

FIG. 9 illustrates an example of a flow chart for controlling cleaning of a scanning device of a mining machine via a user interface. Operations of FIG. 9 may be configured to be performed by controller 112, for example in parallel with operations of FIG. 6 and/or FIG. 8.

At operation 901, mining machine 100, 200 may be in a remote control mode, for example configured to be remotely controlled by controller 112 of remote control device 300.

At operation 902, controller 112 may be configured to determine that the fluid container is not empty, for example following the "No" branch from operation 804. In general, controller 112 may be configured to determine that the fluid level of the detergent is above a threshold (e.g., a third threshold). This threshold may be higher than or equal to the (first) threshold of operation 804. Controller 112 may be configured to move to execution of operation 903, in response to determining that the fluid container is not empty, or more generally in response to determining that the fluid level is above the (third) threshold.

At operation 903, controller 112 may be configured to indicate availability of cleaning, for example by lighting a button of the user interface. Controller 112 may be configured to enable manual control of the cleaning of scanning device 114, in response to determining, at operation 902, that the fluid level of the detergent is above the threshold. This provides the benefit of enabling the operator of mining machine 100 to manually initiate cleaning of scanning device 114 regardless of the current operational state of mining machine 100, 200. The operator might for example take mining machine under manual control and force cleaning of scanning device 114, in order to subsequently continue autonomous operation.

At operation 904, controller 112 may be configured to detect pressing of the button. Controller 112 may be configured to cause cleaning of scanning device 114, in response to detecting the pressing of the button. Controller 112 may be configured to cause the cleaning to be continued until detecting release of the button. Controller 112 may be configured to cause the cleaning on scanning device 114 to be terminated, in response to detecting the release of the button. Cleaning may be therefore performed while the button is continuously pressed and terminated upon release of the button.

At operation 905, controller 112 may be configured to cause the button to blink during the cleaning, for example at the first rate. This enables to provide a confirmation to the user that the continuous pressing of the button has been recognized by controller 112 and that cleaning is ongoing.

FIG. 10 illustrates an example of an apparatus configured to practise one or more example embodiments. Apparatus 1000 may be or comprise a mining machine control apparatus, such as for example a server communicatively coupled to mining machine 100, 200, a control apparatus located at mining machine 100, 200, controller 112, mining machine 100, 200 itself, or in general any device or system configured to implement the functionality described herein. Although apparatus 1000 is illustrated as a single device, it is appreciated that, wherever applicable, functions of apparatus 1000 may be distributed to a plurality of devices.

Apparatus 1000 may comprise at least one processor 1002. The at least one processor 1002 may comprise, for example, one or more of various processing devices, such as for example a co-processor, a microprocessor, a controller, a digital signal processor (DSP), a processing circuitry with or without an accompanying DSP, or various other processing devices including integrated circuits such as, for example, an application specific integrated circuit (ASIC), a field programmable gate array (FPGA), a microcontroller unit (MCU), programmable logic controller (PLC), a hardware accelerator, a special-purpose computer chip, or the like.

Apparatus 1000 may further comprise at least one memory 1004. The at least one memory 1004 may be configured to store, for example, computer program code or the like, for example operating system software and application software. The at least one memory 1004 may comprise one or more volatile memory devices, one or more non-volatile memory devices, and/or a combination thereof. For example, the memory may be embodied as magnetic storage devices (such as hard disk drives, etc.), optical magnetic storage devices, or semiconductor memories (such as mask ROM, PROM (programmable ROM), EPROM (erasable PROM), flash ROM, RAM (random access memory), etc.). Memory 1004 is provided as an example of a (non-transitory) computer readable medium. The term "non-transitory," as used herein, is a limitation of the medium itself (i.e., tangible, not a signal) as opposed to a limitation on data storage persistency (e.g., RAM vs. ROM). The at least one memory 1004 may be also embodied separate from apparatus 1000, for example as a computer readable (storage) medium, examples of which include memory sticks, compact discs (CD), or the like.

When apparatus 1000 is configured to implement some functionality, some component and/or components of apparatus 1000, such as for example the at least one processor 1002 and/or the at least one memory 1004, may be configured to implement this functionality. Furthermore, when the at least one processor 1002 is configured to implement some functionality, this functionality may be implemented using program code 706 comprised, for example, in the at least one memory 1004.

The functionality described herein may be performed, at least in part, by one or more computer program product components such as software components. According to an example embodiment, apparatus 1000 comprises a processor or processor circuitry, such as for example a microcontroller, configured by program code 1006, when executed, to execute the embodiments of the operations and functionality described herein. Program code 1006 is provided as an example of instructions which, when executed by the at least one processor 1002, cause performance of apparatus 1000.

For example, controller 112 may be at least partially implemented as program code configured to cause apparatus 1000 to perform functionality of controller 112. Similarly, transmission or reception of data, e.g., data, instruction(s), signal(s), or command(s), over an internal or external communication interface of mining machine 100, 200 may be controlled by software.

Alternatively, or in addition, the functionality described herein can be performed, at least in part, by one or more hardware logic components. For example, and without limitation, illustrative types of hardware logic components that can be used include field-programmable gate arrays (FPGA), application-specific integrated circuits (ASIC), application-specific standard products (ASSP), system-on-a-chip systems (SOC), complex programmable logic devices (CPLD), graphics processing units (GPU), neural processing units (NPU), tensor processing units (TPU), or the like. Controller 112 may comprise control circuitry, for example any of the above hardware logic components or a combination of at least one processor and least one memory, for implementing functionality described herein.

Apparatus 1000 may comprise a communication interface 1008 configured to enable apparatus 1000 to transmit and/or receive information. Communication interface 1008 may comprise an internal or external communication interface, such as for example a radio interface between mining machine and controller 112 or an internal control bus within drill rig 200. Apparatus 1000 may further comprise other components and/or functions such as for example user interface 1010 comprising at least one input device and/or at least one output device. The input device may take various forms such as a keyboard, a touch screen, or one or more embedded control buttons, joysticks, or other type of manual controllers. The output device may for example comprise a display, a speaker, or the like. User interface 1010 may be configured to enable a human operator to monitor or control various functions of mining machine 100, 200.

Apparatus 1000 may be configured to perform or cause performance of any aspect of the method(s) described herein. Further, a computer program or a computer program product may comprise instructions for causing, when executed by apparatus 1000, apparatus 1000 to perform any aspect of the method(s) described herein. Further, apparatus 1000 may comprise means for performing any aspect of the method(s) described herein. In one example, the means comprises the at least one processor 1002, the at least one memory 1004 including program code 1006 (instructions) configured to, when executed by the at least one processor 1002, cause apparatus 1000 to perform the method(s). In general, computer program instructions may be executed on means providing generic processing functions. Such means may be embedded for example in a computer, a server, or the like. The method(s) may be thus computer-implemented, for example based algorithm(s) executable by the generic processing functions, an example of which is the at least one processor 1002. Apparatus 1000 may comprise means for transmitting or receiving information, for example one or more wired or wireless (e.g., radio) transmitters or receivers, which may be coupled or be configured to be coupled to one or more antennas, or transmitter(s) or receiver(s) of a wired communication interface.

According to a first aspect, an apparatus for controlling a mining machine is disclosed. The apparatus may comprise: at least one processor; and at least one memory including computer program code, the at least one memory and the computer program code configured to, with the at least one processor, cause the apparatus at least to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary.

According to an example embodiment of the first aspect, the computer program code is further configured to, with the at least one processor, cause the apparatus to: detect the carrier of the mining machine to be substantially stationary based on a current operational state of the mining machine in an automated sequence of operational states of the mining machine.

According to an example embodiment of the first aspect, the current operational state of the mining machine comprises one of the following: an operational state configured for loading of mining material by the mining machine, an operational state configured for unloading of the mining material by the mining machine, an operational state configured for waiting for proceeding to a next operational state in the automated sequence of operational states, an operational state associated with a navigational error, or an idle state.

According to an example embodiment of the first aspect, the computer program code is further configured to, with the at least one processor, cause the apparatus to: cause the mining machine to proceed to the next operational state in the automated sequence of operational states of the mining machine, in response to completion of the cleaning of the scanning device.

According to an example embodiment of the first aspect, the computer program code is further configured to, with the at least one processor, cause the apparatus to: detect the carrier of the mining machine to be substantially stationary based on sensor data of the carrier of the mining machine.

According to an example embodiment of the first aspect, the computer program code is further configured to, with the at least one processor, cause the apparatus to: detect the need to clean the scanning device of the mining machine based on one or more of the following: receiving, from the scanning device, an indication of obstruction of the scanning device, or receiving, from the navigation application, an indication of reduced accuracy or reliability of determining a position of the mining machine.

According to an example embodiment of the first aspect, the computer program code is further configured to, with the at least one processor, cause the apparatus to: output, via a user interface, a query to an operator of the mining machine to request a permission to clean the scanning device, in response to detecting the need for cleaning the scanning device; and cause the cleaning of the scanning device, further in response to receiving, from the operator of the mining machine via the user interface, an instant permission to clean the scanning device, or cause the cleaning of the scanning device regardless of whether the carrier of the mining machine is substantially stationary, in response to receiving, from the operator of the mining machine via the user interface, a command to instantly initiate cleaning of the scanning device, or determine not to cause the cleaning of the scanning device, in response to receiving, from the operator of the mining machine via the user interface, an instant refusal to clean the scanning from the operator of the mining machine via the user interface.

According to an example embodiment of the first aspect, the computer program code is further configured to, with the at least one processor, cause the apparatus to: receive, from the operator of the mining machine via the user interface, a default permission to clean the scanning device; and cause the cleaning of the scanning device based on the default permission, in response to not receiving the instant refusal to clean the scanning device within a predetermined delay period from the query to the operator of the mining machine.

According to an example embodiment of the first aspect, the computer program code is further configured to, with the at least one processor, cause the apparatus to: receive, from the operator of the mining machine via the user interface, a default refusal of cleaning the scanning device; and determine, based on the default refusal, not to cause the cleaning of the scanning device, in response to not receiving the instant permission to clean the scanning device within the predetermined delay period from the query to the operator of the mining machine.

According to an example embodiment of the first aspect, the computer program code is further configured to, with the at least one processor, cause the apparatus to: determine not to cause the cleaning of the scanning device, in response to detecting a fluid level of a detergent configured for cleaning the scanning device to be below a first threshold.

According to an example embodiment of the first aspect, the computer program code is further configured to, with the at least one processor, cause the apparatus to: output an indication of the fluid level of the detergent being below a second threshold via the user interface to the operator of the mining machine or via a communication interface to an external control device, wherein the second threshold is higher than or equal the first threshold.

According to an example embodiment of the first aspect, the computer program code is further configured to, with the at least one processor, cause the apparatus to: enable manual control of the cleaning of the scanning device, in response to determining that the fluid level of the detergent is above a third threshold, wherein the third threshold is higher than or equal the first threshold.

According to a second aspect, a mining machine is disclosed. The mining machine may comprise: at least one processor; and at least one memory including computer program code, the at least one memory and the computer program code configured to, with the at least one processor, cause the mining machine at least to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary. The computer program code may be configured to, with the at least one processor, cause the mining machine to perform any example embodiment(s) of the apparatus of the first aspect.

According to a third aspect a remote control device is disclosed. The remote control device may comprise: at least one processor; and at least one memory including computer program code, the at least one memory and the computer program code configured to, with the at least one processor, cause the remote control device at least to: detect a need to clean a scanning device of a mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary. The computer program code may be configured to, with the at least one processor, cause the remote control device to perform any example embodiment(s) of the apparatus of the first aspect.

FIG. 11 illustrates an example of a method for controlling a mining machine, according to a fourth aspect of the present disclosure. The method may comprise a computer-implemented method performed by, for example, apparatus 1000 such as controller 112.

At 1101, the method may comprise detecting a need to clean a scanning device of the mining machine, wherein the scanning device is configured to provide scanning data to a navigation application of the mining machine.

At 1102, the method may comprise detecting a carrier of the mining machine to be substantially stationary.

At 1103, the method may comprise causing cleaning of the scanning device, in response to detecting the carrier of the mining machine to be substantially stationary.

According to an example embodiment of the fourth aspect, the method comprises: detecting the carrier of the mining machine to be substantially stationary based on a current operational state of the mining machine in an automated sequence of operational states of the mining machine.

According to an example embodiment of the fourth aspect, the current operational state of the mining machine comprising one of the following: an operational state configured for loading of mining material by the mining machine, an operational state configured for unloading of the mining material by the mining machine, an operational state configured for waiting for proceeding to a next operational state in the automated sequence of operational states, an operational state associated with a navigational error, or an idle state.

According to an example embodiment of the fourth aspect, the method comprises: causing the mining machine to proceed to the next operational state in the automated sequence of operational states of the mining machine, in response to completing of the cleaning of the scanning device.

According to an example embodiment of the fourth aspect, the method comprises: detecting the carrier of the mining machine to be substantially stationary based on sensor data of the carrier of the mining machine.

According to an example embodiment of the fourth aspect, the method comprises: detecting the need to clean the scanning device of the mining machine based on one or more of the following: receiving, from the scanning device, an indication of obstruction of the scanning device, or receiving, from the navigation application, an indication of reduced accuracy or reliability of determining a position of the mining machine.

According to an example embodiment of the fourth aspect, the method comprises: outputting, via a user interface, a query to an operator of the mining machine to request a permission to clean the scanning device, in response to detecting the need for cleaning the scanning device; and causing the cleaning of the scanning device, further in response to receiving, from the operator of the mining machine via the user interface, an instant permission to clean the scanning device, or causing the cleaning of the scanning device regardless of whether the carrier of the mining machine is substantially stationary, in response to receiving, from the operator of the mining machine via the user interface, a command to instantly initiate cleaning of the scanning device, or determining not to cause the cleaning of the scanning device, in response to receiving, from the operator of the mining machine via the user interface, an instant refusal to clean the scanning from the operator of the mining machine via the user interface.

According to an example embodiment of the fourth aspect, the method comprises: receiving, from the operator of the mining machine via the user interface, a default permission to clean the scanning device; and causing the cleaning of the scanning device based on the default permission, in response to not receiving the instant refusal to clean the scanning device within a predetermined delay period from the query to the operator of the mining machine.

According to an example embodiment of the fourth aspect, the method comprises: receiving, from the operator of the mining machine via the user interface, a default refusal of cleaning the scanning device; and determining, based on the default refusal, not to cause the cleaning of the scanning device, in response to not receiving the instant permission to clean the scanning device within the predetermined delay period from the query to the operator of the mining machine.

According to an example embodiment of the fourth aspect, the method comprises: determining not to cause the cleaning of the scanning device, in response to detecting a fluid level of a detergent configured for cleaning the scanning device to be below a first threshold.

According to an example embodiment of the fourth aspect, the method comprises: outputting an indication of the fluid level of the detergent being below a second threshold via the user interface to the operator of the mining machine or via a communication interface to an external control device, and the second threshold is higher than or equal the first threshold.

According to an example embodiment of the fourth aspect, the method comprises: enabling manual control of the cleaning of the scanning device, in response to determining that the fluid level of the detergent is above a third threshold, wherein the third threshold is higher than or equal the first threshold.

According to an example embodiment of the fourth aspect, the method is performed by the mining machine.

According to an example embodiment of the fourth aspect, the method is performed by a remote control device external to the mining machine and configured to remotely control the mining machine.

According to a fifth aspect, an apparatus may comprise means for detecting a need to clean a scanning device of the mining machine, wherein the scanning device is configured to provide scanning data to a navigation application of the mining machine; means for detecting a carrier of the mining machine to be substantially stationary; and means for causing cleaning of the scanning device, in response to detecting the carrier of the mining machine to be substantially stationary. The apparatus may comprise means for performing any example embodiment(s) of the method of the fourth aspect.

According to a sixth aspect, a computer program, a computer program product, or a (non-transitory) computer-readable medium may comprise program instructions which, when executed by an apparatus, cause the apparatus at least to: detect a need to clean a scanning device of the mining machine, wherein the scanning device is configured to provide scanning data to a navigation application of the mining machine; detect a carrier of the mining machine to be substantially stationary; and cause cleaning of the scanning device, in response to detecting the carrier of the mining machine to be substantially stationary. The computer program, the computer program product, or the (non-transitory) computer-readable medium may comprise program instructions which, when executed by an apparatus, cause the apparatus to perform any example embodiment(s) of the method of the fourth aspect.

Although the subject matter has been described in language specific to structural features and/or acts, it is to be understood that the subject matter defined in the appended claims is not necessarily limited to the specific features or acts described above. Rather, the specific features and acts described above are disclosed as examples of implementing the claims and other equivalent features and acts are intended to be within the scope of the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items.

The steps or operations of the methods described herein may be carried out in any suitable order, or simultaneously where appropriate. Additionally, individual blocks may be deleted from any of the methods without departing from the scope of the subject matter described herein. Aspects of any of the example embodiments described above may be combined with aspects of any of the other example embodiments described to form further example embodiments without losing the effect sought.

The term 'comprising' is used herein to mean including the method, blocks, or elements identified, but that such blocks or elements do not comprise an exclusive list and a method or apparatus may contain additional blocks or elements.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements. Term "or" may be understood to also cover a case where both of the items separated by "or" are included. Hence, "or" may be understood as an inclusive "or" rather than an exclusive "or".

Although subjects may be referred to as 'first' or 'second' subjects, this does not necessarily indicate any order or importance of the subjects. Instead, such attributes may be used solely for the purpose of making a difference between subjects.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from scope of this specification.

## Claims

1. An apparatus for controlling a mining machine, the apparatus comprising:
at least one processor; and
at least one memory including program code, the at least one memory and the computer program code configured to, with the at least one processor, cause the apparatus at least to:
detect a need to clean a scanning device of the mining machine, wherein the scanning device is configured to provide scanning data to a navigation application of the mining machine;
detect a carrier of the mining machine to be substantially stationary; and
cause cleaning of the scanning device, in response to detecting the carrier of the mining machine to be substantially stationary.

2. The apparatus according to claim 1, wherein the computer program code is further configured to, with the at least one processor, cause the apparatus to:
detect the carrier of the mining machine to be substantially stationary based on a current operational state of the mining machine in an automated sequence of operational states of the mining machine.

3. The apparatus according to claim 2, wherein the current operational state of the mining machine comprises one of the following:
an operational state configured for loading of mining material by the mining machine,
an operational state configured for unloading of the mining material by the mining machine,
an operational state configured for waiting for proceeding to a next operational state in the automated sequence of operational states,
an operational state associated with a navigational error, or
an idle state.

4. The apparatus according to claim 3, wherein the computer program code is further configured to, with the at least one processor, cause the apparatus to:
cause the mining machine to proceed to the next operational state in the automated sequence of operational states of the mining machine, in response to completion of the cleaning of the scanning device.

5. The apparatus according to any of claims 1 to 4, wherein the computer program code is further configured to, with the at least one processor, cause the apparatus to:
detect the carrier of the mining machine to be substantially stationary based on sensor data of the carrier of the mining machine.

6. The apparatus according to any of claims 1 to 5, wherein the computer program code is further configured to, with the at least one processor, cause the apparatus to:
detect the need to clean the scanning device of the mining machine based on one or more of the following:
receiving, from the scanning device, an indication of obstruction of the scanning device, or
receiving, from the navigation application, an indication of reduced accuracy or reliability of determining a position of the mining machine.

7. The apparatus according to any of claims 1 to 6, wherein the computer program code is further configured to, with the at least one processor, cause the apparatus to:
output, via a user interface, a query to an operator of the mining machine to request a permission to clean the scanning device, in response to detecting the need for cleaning the scanning device; and
cause the cleaning of the scanning device, further in response to receiving, from the operator of the mining machine via the user interface, an instant permission to clean the scanning device, or
cause the cleaning of the scanning device regardless of whether the carrier of the mining machine is substantially stationary, in response to receiving, from the operator of the mining machine via the user interface, a command to instantly initiate cleaning of the scanning device, or
determine not to cause the cleaning of the scanning device, in response to receiving, from the operator of the mining machine via the user interface, an instant refusal to clean the scanning from the operator of the mining machine via the user interface.

8. The apparatus according to claim 7, wherein the computer program code is further configured to, with the at least one processor, cause the apparatus to:
receive, from the operator of the mining machine via the user interface, a default permission to clean the scanning device; and
cause the cleaning of the scanning device based on the default permission, in response to not receiving the instant refusal to clean the scanning device within a predetermined delay period from the query to the operator of the mining machine.

9. The apparatus according to claim 8, wherein the computer program code is further configured to, with the at least one processor, cause the apparatus to:
receive, from the operator of the mining machine via the user interface, a default refusal of cleaning the scanning device; and
determine, based on the default refusal, not to cause the cleaning of the scanning device, in response to not receiving the instant permission to clean the scanning device within the predetermined delay period from the query to the operator of the mining machine.

10. The apparatus according to any of claims 1 to 9, wherein the computer program code is further configured to, with the at least one processor, cause the apparatus to:
determine not to cause the cleaning of the scanning device, in response to detecting a fluid level of a detergent configured for cleaning the scanning device to be below a first threshold.

11. The apparatus according to any of claims 10, wherein the computer program code is further configured to, with the at least one processor, cause the apparatus to:
output an indication of the fluid level of the detergent being below a second threshold via the user interface to the operator of the mining machine or via a communication interface to an external control device, wherein the second threshold is higher than or equal the first threshold.

12. The apparatus according to claim 10 or 11, wherein the computer program code is further configured to, with the at least one processor, cause the apparatus to:
enable manual control of the cleaning of the scanning device, in response to determining that the fluid level of the detergent is above a third threshold, wherein the third threshold is higher than or equal to the first threshold.

13. A mining machine comprising the apparatus according to any of claims 1 to 12.

14. A remote control device comprising the apparatus according to any of claims 1 to 12 and configured to remotely control the mining machine.

15. A method for controlling a mining machine, the method comprising:
detecting a need to clean a scanning device of the mining machine, wherein the scanning device is configured to provide scanning data to a navigation application of the mining machine;
detecting a carrier of the mining machine to be substantially stationary; and
causing cleaning of the scanning device, in response to detecting the carrier of the mining machine to be substantially stationary.

16. A computer program comprising instructions which, when executed by an apparatus, cause the apparatus at least to:
detect a need to clean a scanning device of the mining machine, wherein the scanning device is configured to provide scanning data to a navigation application of the mining machine;
detect a carrier of the mining machine to be substantially stationary; and
cause cleaning of the scanning device, in response to detecting the carrier of the mining machine to be substantially stationary.
